# EUROPÄISCHE PATENTSCHRIFT

(11) **EP 4 185 432 B1**
(45) Veröffentlichungstag und Bekanntmachung des Hinweises auf die Patenterteilung: **13.11.2024**
(21) Anmeldenummer: 21748870.9
(22) Anmeldetag: 22.07.2021
(51) Int. Cl.: B23F 19/00, B23F 5/16, B23F 17/00

(54) **VERFAHREN ZUR BEARBEITUNG UND ERZEUGUNG EINER VERZAHNUNG AN EINEM WERKSTÜCK**
METHOD FOR MACHINING AND PRODUCING A TOOTHED PORTION ON A WORKPIECE
PROCÉDÉ POUR USINER ET PRODUIRE UNE DENTURE SUR UNE PIÈCE

(30) Priorität: 23.07.2020 DE 102020004472
(43) Veröffentlichungstag der Anmeldung: 31.05.2023
(73) Patentinhaber: GLEASON-PFAUTER MASCHINENFABRIK GMBH, 71636 Ludwigsburg (DE)
(72) Erfinder: KRESCHEL, Jürgen, 71679 Asperg (DE)
(74) Vertreter: Leinweber & Zimmermann
(86) Internationale Anmeldenummer: PCT/EP2021/070590
(87) Internationale Veröffentlichungsnummer: WO 2022/018223

(56) Entgegenhaltungen:
- EP-A1- 3 620 251
- EP-A2- 3 242 175
- EP-A2- 3 242 176
- DE-A1- 3 402 429

## Beschreibung

Die Erfindung betrifft ein Verfahren gemäss dem Oberbegriff des Anspruchs 1 zur Bearbeitung oder Erzeugung einer Verzahnung an einem Werkstück mit einer Werkzeugverzahnung, bei dem die Werkzeugverzahnung unter einer ihre Zähne den Zahnlücken der Werkstückverzahnung zuordnenden Wälzkopplung in einen ersten Bearbeitungseingriff mit der in einer Aufspannung aufgespannt rotierenden Werkstückverzahnung gebracht wird. Ein derartiges Verfahren ist aus dem Dokument EP 3 242 175 A1 bekannt.

Derartige Verzahnungsbearbeitungen sind selbstverständlich gut bekannt und werden beispielsweise in Form des Wälzfräsens, Wälzstoßens oder Wälzschälens ausgeübt. In der Wälzkopplung sind die Werkzeugzähne den Zahnlücken der Werkstückverzahnung zugeordnet, so dass die Zahnköpfe der Werkzeugverzahnung im Fußbereich der Werkstückverzahnung arbeiten und diesen ggf. durch Formgebung gestalten, wohingegen die Zahnköpfe der Werkstückverzahnung im Fußbereich der Werkzeugverzahnung liegen und über dessen Gestaltung beeinflussbar sind. Auf diese Weise kann beispielsweise die Zahnkopfhöhe am Werkstück eingestellt werden, sofern dies nicht über ein separates Werkzeug wie etwa eine Rolle geschieht.

EP 3 242 175 A2 und EP 3 242 176 A2 betreffen Wälzbearbeitungsverfahren, bei denen Werkstücke insbesondere durch Wälzschleifen mit Schleifschnecken bearbeitet werden, welche zwischenzeitlich einschließlich ihres Kopfkreisdurchmessers abgerichtet werden. EP 3 620 251 A1 offenbart eine Zustellstrategie bei der Erzeugung von Zahnlücken einer Werkstückverzahnung durch Wälzschälen.

Der Erfindung liegt die Aufgabe zugrunde, ein Verfahren der eingangs beschriebenen Art im Hinblick auf eine gute Kombination aus möglichst einfacher Verfahrensgestaltung und zufriedenstellender Präzision etwaiger späterer weiterer Bearbeitung zu verbessern.

Diese Aufgabe wird in verfahrenstechnischer Hinsicht durch eine Weiterbildung des Verfahrens der eingangs genannten Art mit den Merkmalen von Anspruch 1 gelöst.

So ist erfindungsgemäß erkannt worden, dass durch eine Bearbeitung der Werkstückverzahnung in phasenverschobener Weise gegenüber der regulären Wälzkopplung eine Verzahnungsbearbeitung z.B. der Zahnköpfe der Werkstückverzahnung unabhängig von der Gestaltung des Fußbereichs der Werkzeugverzahnung ermöglicht wird und diesbezüglich die Flexibilität erhöht bzw. das Verfahren durch Abwesenheit zusätzlicher Werkzeuge vereinfacht wird, und dabei dennoch durch Kopplung der Bearbeitungseingriffe über die gleiche Werkstückaufspannung die Bezugsdrehachse der Verzahnungserzeugung/-bearbeitung sowie der Bearbeitungsfläche des zweiten Bearbeitungseingriffs die gleiche bleibt. Auf diese Weise lässt sich z.B. der Kopfkreisdurchmesser als Positionierfläche für Greifer oder beim Aufspannen für eine spätere Zusatzbearbeitung heranziehen, ohne Positions- oder Aufspannfehler bedingt durch unterschiedlichen Drehachsbezug der Positionierfläche zum Drehachsbezug der Werkstückverzahnung. Die Synchronisierung der Drehachsen der Wälzkopplung des ersten Bearbeitungseingriffs kann dabei erhalten bleiben.

In einer bevorzugten Ausgestaltung erfolgt, wie oben bereits erwähnt, durch den zweiten Bearbeitungseingriff eine Bearbeitung der Zahnköpfe der Werkstückverzahnung durch die Zahnköpfe der Werkzeugverzahnung. Die Phasenverschiebung liegt dann in einem Bereich um eine halbe Teilung entsprechend der Ausdehnung des Werkstückzahnkopfes in Umfangsrichtung.

In diesem Zusammenhang ist vorgesehen, dass ein Bearbeitungsbereich des zweiten Bearbeitungseingriffs unterschiedliche Phasenverschiebungen abdeckt. Dies erlaubt zum einen die Bearbeitung von Werkstückzahnköpfen bei asymmetrischer Werkstückgestaltung, und erhöht zum anderen die Flexibilität und/oder die Genauigkeit des Verfahrens.

In einer bevorzugten Verfahrensart wird der Zahnkopfdurchmesser der Werkstück-verzahnung durch Kontaktlinien des zweiten Bearbeitungseingriffs bestimmt. Das Verfahren wird somit gezielt zur Einstellung des Zahnkopfdurchmessers herangezogen und nicht (nur) zu dessen Formgebung. An diese wird jedoch auch gedacht, beispielsweise könnte eine Kopfphase mit dem erfindungsgemäßen Verfahren erzeugt werden, indem der phasenverschobenen Wälzkopplung neben einer axialen (z) Maschinenachsbewegung noch eine radiale (x) Maschinenachsbewegung überlagert wird.

In einer besonders bevorzugten Ausgestaltung ist die Abweichung im Kopfkreisdurchmesser der Werkstückverzahnung von seinem über einen Werkstückzahn genommenen Mittelwert geringer als 200 µm, bevorzugt geringer als 80 µm, insbesondere als 20 µm. Gegebenenfalls werden hierzu beim zweiten Bearbeitungseingriff unterschiedliche Phasenverschiebungen herangezogen, so dass sich der Kopfkreisdurchmesser über die Einhüllende der Kontaktlinien bei den relativ untereinander phasenverschobenen Teilbearbeitungen ergibt.

In einer besonders bevorzugten Ausgestaltung wird das Verfahren unter einer Vorschubbewegung des zweiten Bearbeitungseingriffs ausgeführt, deren Hauptbewegungskomponente entlang der Werkstückdrehachse (Z) gerichtet ist. Dadurch lassen sich die oben beschriebenen Effekte auf beispielsweise die gesamte Zahnungsbreite erstrecken, oder auch nur einen Teil davon, falls dies gewünscht ist.

In einer ebenfalls bevorzugten Ausgestaltung wird mit einer kontinuierlichen Phasenverschiebung im zweiten Bearbeitungseingriff gearbeitet, insbesondere einer oszillierenden Phasenverschiebung. Die Bearbeitung z.B. der Zahnköpfe der Werkstückverzahnung erfolgt dann bildlich gesprochen auf unterschiedlichen Höhen der Verzahnungsbreite, einmal von der rechten Flanke hin zur linken Flanke und einmal von der linken Flanke hin zur rechten Flanke. Es versteht sich, dass der Vorschub hierzu angepasst vorzunehmen ist.

Bei dem Verfahren ist bevorzugt das Verhältnis aus Oszillationsfrequenz der Phasenverschiebung zu Werkstückdrehzahl durch (2k+1)/(2m) gegeben, wobei m größer 2 und bevorzugt kleiner 10, insbesondere kleiner 7, bevorzugt kleiner oder gleich 4 und k größer oder gleich 0 und bevorzugt kleiner 10, insbesondere kleiner 7 und bevorzugt k und/oder m ganzzahlig.

In einer bevorzugten Gestaltung ist der erste Bearbeitungseingriff ein Bearbeitungseingriff des Wälzschälens oder Hartschälens, insbesondere mit einem im Treppenschliff geschliffenen Schälrad. Für diese Bearbeitung kommt die erfindungsgemäße Flexibilität besonders zur Geltung. Bevorzugt werden erste und zweite Bearbeitung mit demselben Achskreuzwinkel ausgeführt.

In einer bevorzugten Ausgestaltung wird die Phasenverschiebung durch eine Zusatzdrehung von Werkstück- und/oder Werkzeug-Verzahnung erzeugt, insbesondere durch eine Zusatzdrehung der Werkstück-Verzahnung. Es können jedoch auch tangentiale lineare Maschinenachsen herangezogen werden, um die phasenverschobene Position zu erreichen. Bevorzugt ist die Tangentialachse jedoch so wie bei der ersten Bearbeitung.

Hinsichtlich der im zweiten Bearbeitungseingriff gebildeten Fläche und ihrer Eignung als greifbare und/oder Positionier-Bestimmungsfläche betrifft die Erfindung somit auch ein Verfahren zur Bearbeitung oder Erzeugung einer Verzahnung an einem Werkstück mit einer Werkzeugverzahnung, bei dem die Werkzeugverzahnung unter einer ihre Zähne den Zahnlücken der Werkstückverzahnung zuordnenden Wälzkopplung in einen ersten Bearbeitungseingriff mit der in einer Aufspannung aufgespannt rotierenden Werkstückverzahnung gebracht wird, nach einem der vorhergehend beschriebener Aspekte, bei dem mit den Zahnkopfbereichen der Werkzeugverzahnung eine optional auch diskontinuierliche, von den Zahnfußbereichen der Werkstückverzahnung abweichende und als greifbare und/oder als Positionierbestimmungsfläche dienende, im Schnitt orthogonal zur Werkstückdrehachse im Wesentlichen ringförmige Fläche durch spanenden Materialabtrag am in derselben Aufspannung aufgespannten Werkstück erzeugt wird.

Im Weiteren betrifft die Erfindung auch ein Steuerprogramm mit entsprechend den oben definierten Verfahrensaspekten definierten Steueranweisungen, sowie auch eine Verzahnungsmaschine, die durch entsprechende Steueranweisungen zur Ausführung eines solchen Verfahrens befähigt ist.

Weitere Merkmale, Einzelheiten und Vorteile der Erfindung ergeben sich aus der nachfolgenden Beschreibung mit Bezug auf die beigefügten Figuren, von denen
Fig. 1 eine Relativlage von Werkstück- und Werkzeug-Verzahnung zeigt,
Fig. 2 eine andere Relativlage von Werkstück- und Werkzeug-Verzahnung zeigt,
Fig. 3 eine detailliertere Darstellung von Zahnköpfen ist,
Fig. 4 Kontaktlinien unterschiedlicher Phasenverschiebungen zeigt,
Fig. 5 Kontaktlinien unterschiedlicher Phasenverschiebungen zeigt,
Fig. 6 eine Kontaktliniendarstellung mit Vorschubbewegung zeigt,
Fig. 7 eine weitere Kontaktliniendarstellung mit Vorschubbewegung zeigt, und
Fig. 8 ein Schälrad mit Treppenschliff zeigt.

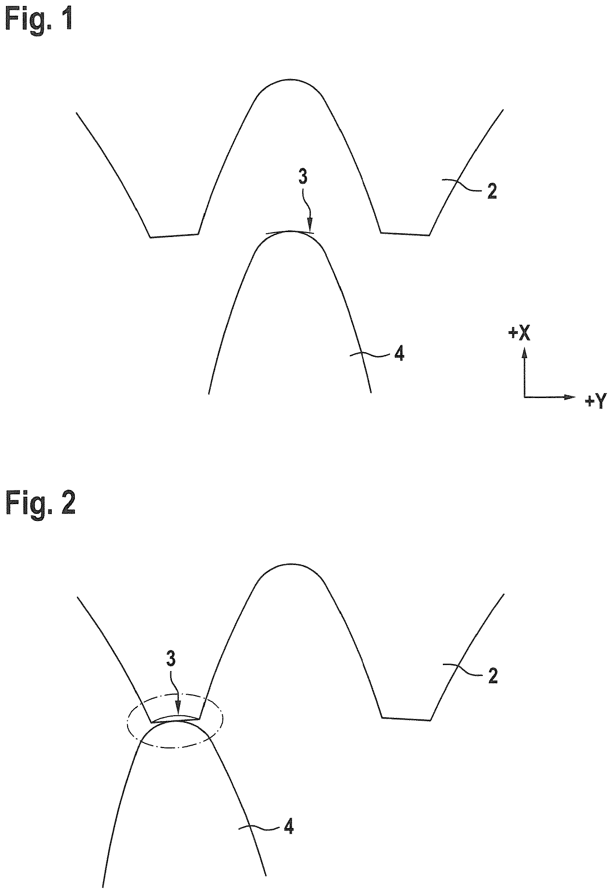

In Fig. 1 ist eine Werkstück-Verzahnung, in diesem Fall eine Innenverzahnung gezeigt und mit 2 bezeichnet. Ein Werkzeugzahn 4 ist in einer Position dargestellt, die hinsichtlich der Wälzkopplung eines Bearbeitungsverfahrens zur Erzeugung der Verzahnung 2 im Wesentlichen dem der tiefsten Zustellung entspricht (die sehr kurz dargestellte Kontaktlinie 3 läge bei tiefster Zustellung im Zahnfuß der Werkstück-Verzahnung 2. Die in Fig. 1 dargestellte Phasenlage entspricht somit z.B. der Situation, bei der nach Erzeugung der Werkstück-Verzahnung 2 bei beibehaltener Wälzkopplung ein radialer Rückzug des Werkzeugs aus dem Werkstück erfolgt ist.

Normalerweise ist bei herkömmlichen Bearbeitungsverfahren die Bearbeitung damit beendet (in kontinuierlich wälzenden Bearbeitungsverfahren werden ja alle Zahnlücken der Werkstückverzahnung gleichzeitig erzeugt), und das Werkstück wird abgespannt und ggf. einer weiteren Bearbeitungsstation übergeben, etwa zum Zahnstirnkantenphasen.

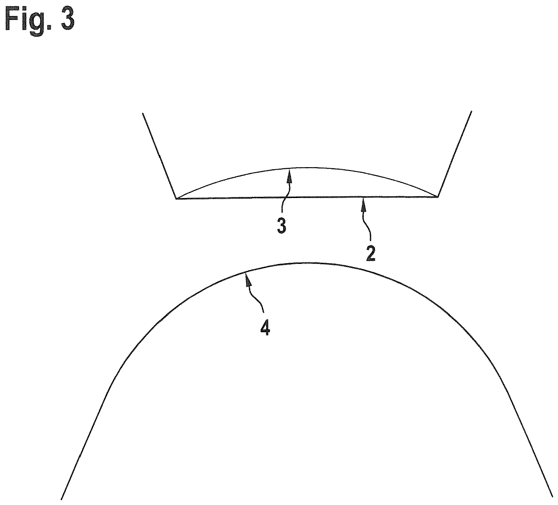

Demgegenüber erfolgt nun jedoch eine weitere Bearbeitung, nämlich eine der Zahnköpfe der Werkstückverzahnung 2 in einem gegenüber der Wälzkopplung der ersten Bearbeitung phasenverschobenen Bearbeitungseingriff. Wie aus den Figuren 1 und 2 hervorgeht, beträgt die Phasenverschiebung hier eine halbe Teilung. Dadurch gelangt der Kopf des Werkzeugzahns 4 in Bearbeitungskontakt mit dem Kopf eines Zahns der Werkstückverzahnung 2, der in Fig. 2 oval eingekreiste Bereich ist in Fig. 3 nochmals in einer anderen vergrößerten Darstellung gezeigt, man erkennt eine Kontaktlinie 3 des Bearbeitungseingriffs, der weiterhin in der Bearbeitungsart der ersten Bearbeitung stattfindet, hier z.B. des Wälzschälens (die Kontaktlinie 3 ist kein 1 zu 1 Abdruck des Profils des Schneidzahns 4, sondern ergibt sich aus diesem Profil unter Berücksichtigung der Maschinenachsbewegungen des Verfahrens als Hüllkurve der Bearbeitungsstellungen des Werkzeugzahns in der herangezogenen Maschinenachskinematik des Wälzschälens).

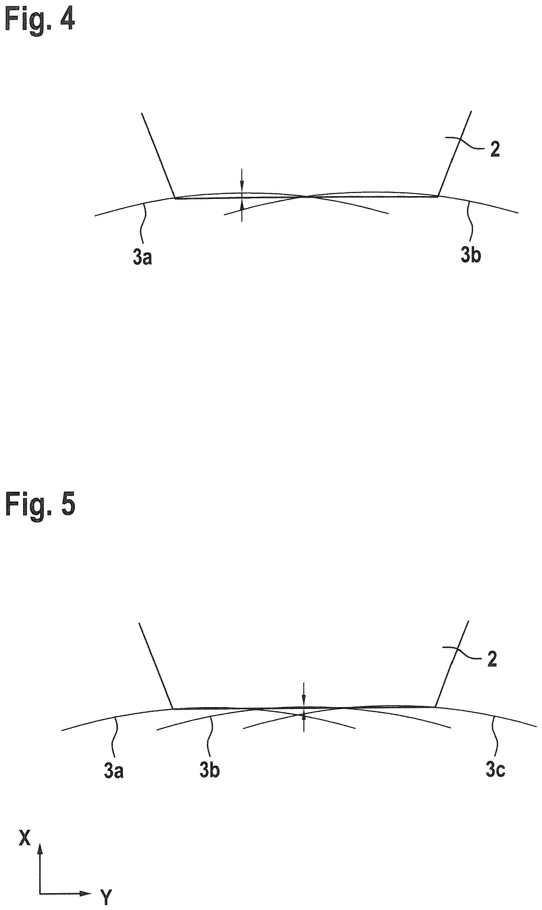

Die Figuren 1 bis 3 erläutern somit das herangezogene Prinzip der Phasenverschiebung für den zweiten Bearbeitungseingriff, wohingegen bevorzugt mehrere unterschiedliche Phasenverschiebungen überlagert werden, um eine genauere Zahnkopfbearbeitung der Werkstückverzahnung 2 zu erreichen. Die Wirkung derselben ist anhand der Figuren 4 und 5 beschrieben, so sind in Fig. 4 zwei Kontaktlinien 3a, 3b unterschiedlicher Phasenverschiebungen dargestellt, man erkennt im Vergleich zu Fig. 3 deutlich die (durch die Pfeile angedeutete, in diesem Ausführungsbeispiel 36 µm) gleichmäßigere durch diese Kontaktlinien erzeugten Kopfflächen, und dies nochmal stärker bei der Darstellung von Fig. 5, in welcher drei Kontaktlinien 3a, 3b, 3c jeweils untereinander unterschiedlicher Phasenverschiebung eingezeichnet sind, und in der eine Abweichung (ca. 6 µm) gegenüber der dargestellten angestrebten Zahnkopffläche mit bloßem Auge kaum noch zu erkennen ist.

Durch zusätzliche Zustellung in Radialrichtung X lässt sich somit mit dem beschriebenen Verfahren der Kopfkreisdurchmesser der Werkstück-Verzahnung einstellen, nachführen oder nach eigenen Wünschen gestalten.

Sollte die Verzahnung bereits vor dem ersten Bearbeitungseingriff der Verzahnungsbearbeitung selbst vorverzahnt sein, lässt sich der zweite Bearbeitungseingriff zeitlich auch vor dem ersten Bearbeitungseingriff ausführen, die Begriffe "erste" und "zweite" sind somit nicht als temporäre Reihenfolge zu verstehen, obwohl diese temporäre Reihenfolge eine bevorzugte Ausgestaltung darstellt.

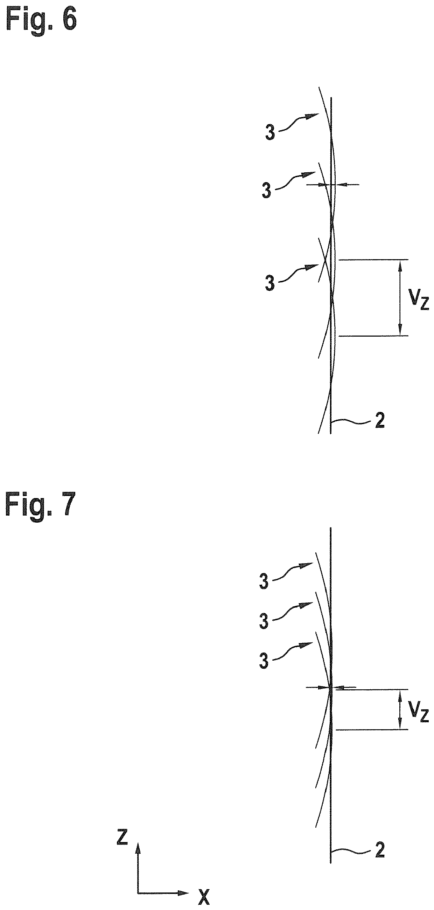

Die in den Figuren 1 bis 5 nur in einer Stirnschnittebene zur Werkstück-Drehachse erläuterte Eingriffsdarstellung über Kontaktlinien ist in den Figuren 6 und 7 noch durch eine Darstellung ergänzt, die einen Axialvorschub V_{z} in Werkstückdrehachsrichtung Z mitberücksichtigt, da der zweite Bearbeitungseingriff über in diesem Ausführungsbeispiel die volle Verzahnungsbreite der Werkstück-Verzahnung 2 hinweggeführt werden soll. In Fig. 6 sind Kontaktlinien in einer Radial-Axial-Ebene X, Z dargestellt, unter Berücksichtigung eines Vorschubs von in Fig. 6 1 mm (pro Werkstückdrehung), welche gegenüber einer Radialreferenz in diesem Beispiel noch zu einer Abweichung von 35 µm führen würde, wohingegen (Fig. 7) eine Halbierung der Vorschub-Rate die diesbezügliche Abweichung bereits auf in diesem Ausführungsbeispiel 9 µm senkt.

Es versteht sich, dass die hier herangezogenen Zahlenwerte lediglich der erläuternden Darstellung dienen, und die Vorschub-Rate auch anders ausfallen kann, insbesondere in den oben erläuterten bevorzugten Bereichen.

Ebenso versteht es sich mit Bezug auf die Figuren 4 und 5, dass die Phasenverschiebung nicht sprunghaft auf diskrete Phasenverschiebungswerte eingestellt werden muss, sondern man nach einmaliger Phasenverschiebung in der richtigen Größenordnung, um Bearbeitungskontakt zwischen den Zahnköpfen von Werkstück- und Werkzeug-Verzahnung herzustellen, eine kontinuierliche Erhöhung der Phasenverschiebung eingestellt werden kann, um die gesamte Zahnkopffläche der Werkstückverzahnung 2 zu überstreichen.

Es versteht sich auch, dass z.B. gegenüber der in Fig. 5 gezeigten Aufspaltung mit Kontaktlinien 3a, 3b, 3c unterschiedlicher Phasenverschiebung (jedoch immer im Bereich einer Größenordnung einer halben Teilung gegenüber der ersten Bearbeitung in tiefster Zustellung), die gemeinsam auf gleicher Zahnhöhe in Verzahnungsbreite gesehen liegen, und durch den Axialvorschub über die gesamte Verzahnungsbreite geführt werden, gemäß dem z.B. anhand von Fig. 7 erläuterten Axialvorschub, die Kontaktlinie 3c aus Fig. 5 über die volle Zahnbreite durch Axialvorschub getragen werden könnte, gefolgt von der Kontaktlinie 3b und schließlich der Kontaktlinie 3a, oder in einer anderen Reihenfolge oder eine Mischform dieser beiden Varianten.

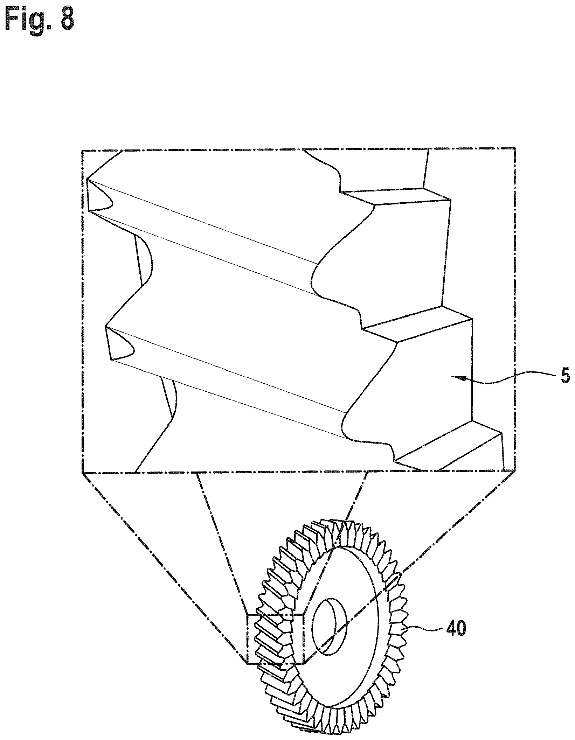

Bevorzugt kommt für die Bearbeitung, sofern der Bearbeitungseingriff der des Wälzschälens oder Hartschälens ist, ein Werkzeug 40 zum Einsatz, dessen Spanflächen 5 im Treppenschliff geschliffen sind, wie in Fig. 8 dargestellt, und welches sowohl die Werkstück-Verzahnung 2 im Wege einer Zahnflankenbearbeitung erzeugt und/oder bearbeitet, als auch deren Zahnköpfe bzw. Zahnkopfflächen bearbeitet und dabei insbesondere einen Zahnkopfdurchmesser der Werkstück-Verzahnung 2 einstellt.

Die so erzeugte Fläche in Form der Zahnkopfflächen der Werkstück-Verzahnung 2 können zudem als Positionier- oder Greiffläche für Greifer einer Automation oder Aufspannvorrichtungen herangezogen werden, aufgrund der Bearbeitung durch den gleichen wälzenden Bearbeitungseingriff in gleicher Werkstückaufspannung sowohl für die Verzahnung selbst als auch die Zahnkopfflächen wird eine präzise Aufspannung für nachfolgende Bearbeitungsschritte erleichtert.

## Patentansprüche

1. Verfahren zur Bearbeitung oder Erzeugung einer Verzahnung (2) an einem Werkstück mit einer Werkzeugverzahnung, bei dem die Werkzeugverzahnung unter einer ihre Zähne (4) den Zahnlücken der Werkstückverzahnung zuordnenden Wälzkopplung in einen ersten Bearbeitungseingriff mit der in einer Aufspannung aufgespannt rotierenden Werkstückverzahnung gebracht wird, wobei die Werkzeugverzahnung in einen gegenüber dieser Zuordnung der Wälzkopplung des ersten Bearbeitungseingriffs, insbesondere im Bearbeitungsabstand tiefster Zustellung, um wenigstens eine Viertelteilung phasenverschobenen zweiten Bearbeitungseingriff mit gegenüber der tiefsten Zustellung des ersten Bearbeitungseingriffs erhöhten Bearbeitungsabstand von dem in derselben Aufspannung des ersten Bearbeitungseingriffs aufgespannten Werkstückverzahnung gebracht wird,
**dadurch gekennzeichnet, dass** durch den zweiten Bearbeitungseingriff eine Bearbeitung der Zahnköpfe der Werkstückverzahnung durch die Zahnköpfe der Werkzeug-verzahnung erfolgt.

2. Verfahren nach Anspruch 1, bei dem ein Bearbeitungsbereich des zweiten Bearbeitungseingriffs unterschiedliche Phasenverschiebungen abdeckt.

3. Verfahren nach einem der vorhergehenden Ansprüche, bei dem der Zahnkopfdurchmesser der Werkstückverzahnung durch Kontaktlinien des zweiten Bearbeitungseingriffs bestimmt wird.

4. Verfahren nach einem der vorhergehenden Ansprüche, bei dem die Abweichung im Kopfkreisdurchmesser der Werkstückverzahnung von seinem über einen Werkstückzahn genommenen Mittelwert geringer ist als 200 µm, bevorzugt geringer als 80 µm, insbesondere als 20 µm.

5. Verfahren nach einem der vorhergehenden Ansprüche, mit einer Vorschubbewegung des zweiten Bearbeitungseingriffs, deren Hauptbewegungskomponente entlang der Werkstückdrehachse gerichtet ist.

6. Verfahren nach einem der vorhergehenden Ansprüche, mit einer kontinuierlichen Phasenverschiebung im zweiten Bearbeitungseingriff, insbesondere einer oszillierenden Phasenverschiebung.

7. Verfahren nach Anspruch 6, bei dem das Verhältnis aus Oszillationsfrequenz der Phasenverschiebung zu Werkstückdrehzahl durch (2k+1)/(2m) gegeben ist, wobei m größer 2 und bevorzugt kleiner 10, insbesondere kleiner 7, bevorzugt kleiner oder gleich 4 und k größer oder gleich 0 und bevorzugt kleiner 10, und bevorzugt k und/oder m ganzzahlig.

8. Verfahren nach einem der vorhergehenden Ansprüche, bei dem der erste Bearbeitungseingriff ein Bearbeitungseingriff des Wälzschälens oder Hartschälens ist.

9. Verfahren nach Anspruch 8, bei dem die Werkzeugverzahnung ein im Treppenschliff geschliffenes Schälrad ist.

10. Verfahren nach einem der vorhergehenden Ansprüche, bei dem die Phasenverschiebung durch eine Zusatzdrehung von Werkstück- und/oder Werkzeugverzahnung erzeugt wird, insbesondere durch eine Zusatzdrehung der Werkstückverzahnung.

11. Verfahren zur Bearbeitung oder Erzeugung einer Verzahnung an einem Werkstück mit einer Werkzeugverzahnung, bei dem die Werkzeugverzahnung unter einer ihre Zähne den Zahnlücken der Werkstückverzahnung zuordnenden Wälzkopplung in einen ersten Bearbeitungseingriff mit der in einer Aufspannung aufgespannt rotierenden Werkstückverzahnung gebracht wird, nach einem Verfahren der vorhergehenden Ansprüche, bei dem mit den Zahnkopfbereichen der Werkzeugverzahnung eine von den Zahnfußbereichen der Werkstückverzahnung abweichende und als greifbare und/oder als Positionierbestimmungsfläche dienende, im Schnitt orthogonal zur Werkstückdrehachse im Wesentlichen ringförmige Fläche durch spanenden Materialabtrag am in derselben Aufspannung aufgespannten Werkstück erzeugt wird.

12. Verfahren nach Anspruch 11, bei dem die im Wesentlichen ringförmige Fläche diskontinuierlich ist.

13. Steuerprogramm mit Steueranweisungen, die, wenn auf einer Steuerung einer Verzahnungsmaschine ausgeführt, diese zur Durchführung eines Verfahrens nach einem der vorherstehenden Ansprüche veranlasst.

14. Verzahnungsmaschine mit einer Werkstückspindel zum Aufspannen eines drehend antreibbaren Werkstücks, einer Werkzeugspindel zum drehenden Antrieb einer Werkzeug-verzahnung, wenigstens einer, insbesondere mehrerer Positionier- und/oder Einstellachsen zur Relativpositionierung der Werkzeugdrehachse gegenüber der Werkstückdrehachse und einer Steuereinrichtung, die über Steueranweisungen zur Ausführung eines Verfahrens nach einem der Ansprüche 1 bis 12 steuert.

## Claims

1. A method for machining or producing a toothing (2) on a workpiece by means of a tool toothing, in which method the tool toothing is brought into a first machining engagement with the rotating workpiece toothing clamped in a clamped setup, such that there is a rolling coupling which assigns tool teeth (4) to the tooth slots of the workpiece toothing, wherein the tool toothing is brought into a second machining engagement, phase-shifted by at least one fourth of the pitch in comparison with such assignment of the roller coupling of the first machining engagement, in particular at the machining distance of deepest advancement, said second machining engagement having an increased machining distance, in comparison with the deepest advancement of the first machining engagement, from the workpiece toothing clamped in the same clamped setup of the first machining engagement,
**characterised in that** the second machining engagement causes the tooth tips of the workpiece toothing to be machined by the tooth tips of the tool toothing.

2. The method according to claim 1, wherein a machining region of the second machining engagement covers different phase shifts.

3. The method according to one of the preceding claims, wherein the tooth tip diameter of the workpiece toothing is determined by contact lines of the second machining engagement.

4. The method according to one of the preceding claims, wherein the deviation in the tip diameter of the workpiece toothing from its mean value taken across a workpiece tooth is less than 200 µm, preferably less than 80 µm, in particular less than 20 µm.

5. The method according to one of the preceding claims, comprising a feed motion of the second machining engagement with a main motion component that is directed along the workpiece axis of rotation.

6. The method according to one of the preceding claims, comprising a continuous phase shift in the second machining engagement, in particular an oscillating phase shift.

7. The method according to claim 6, wherein the ratio of the oscillation frequency of the phase shift to the rate of rotation of the workpiece is derived from (2k+1)/(2m), wherein m is greater than 2 and preferably less than 10, in particular less than 7 and preferably less than or equal to 4, k is greater than or equal to 0 and preferably less than 10, and k and/or m is/are preferably a whole number.

8. The method according to one of the preceding claims, wherein the first machining engagement is a gear skiving or hard skiving machining engagement.

9. The method according to claim 8, wherein the tool toothing is a skiving wheel ground by step grinding.

10. The method according to one of the preceding claims, wherein the phase shift is produced by means of an additional rotation of the workpiece and/or tool toothing, in particular by means of an additional rotation of the workpiece toothing.

11. The method for machining or producing a toothing on a workpiece by means of a tool toothing, in which method the tool toothing is brought into a first machining engagement with the workpiece toothing rotating in a clamped setup, such that there is a rolling coupling which assigns tool teeth to the tooth slots of the workpiece toothing using a method according to the preceding claims, wherein a surface, which differs from the tooth foot regions of the workpiece toothing and serves as a grippable surface and/or as a positioning determination surface and which is substantially annular in the section orthogonal to the workpiece axis of rotation, is produced with the tooth tip regions of the tool toothing by removing material from the workpiece clamped in the same clamped setup.

12. The method according to claim 11, wherein the substantially annular surface is discontinuous.

13. A control program comprising control instructions that, when executed in a controller of a gear cutting machine, causes said machine to carry out a method according to one of the preceding claims.

14. A gear cutting machine comprising: a workpiece spindle for clamping a rotationally drivable workpiece; a tool spindle for driving a tool toothing in a rotary motion; at least one, but preferably a plurality of positioning and/or setting axes for positioning the tool axis of rotation relative to the workpiece axis of rotation; and a control device that performs a control by issuing control instructions for executing a method according to one of claims 1 to 12.

## Revendications

1. Procédé d'usinage ou de production de denture (2) sur une pièce à usiner à l'aide d'une denture d'outil, dans lequel la denture d'outil est amenée dans un premier contact d'usinage avec la denture de pièce à usiner mise en rotation tout en étant serrée dans une configuration d'ablocage dans ce qui constitue un couplage roulant dans lequel les dents (4) de l'outil sont associées aux entredents de la denture de pièce à usiner, ladite denture de l'outil étant amenée dans un deuxième contact d'usinage qui est déphasé d'au moins un quart de pas par rapport à ladite association réalisée dans le cadre du couplage roulant du premier contact d'usinage, notamment en ce qui concerne la distance d'usinage à la plus grande profondeur de passe, ledit deuxième contact d'usinage ayant, par rapport à la plus grande profondeur de passe du premier contact d'usinage, une distance d'usinage accrue vis-à-vis de la denture de la pièce serrée dans la même configuration d'ablocage du premier contact d'usinage,
**caractérisé en ce que** les têtes de dents de la denture de la pièce à usiner sont usinées par les têtes des dents de la denture de l'outil au cours du deuxième contact d'usinage.

2. Procédé selon la revendication 1, dans lequel une zone d'usinage du deuxième contact d'usinage s'étend sur différents déphasages.

3. Procédé selon l'une des revendications précédentes, dans lequel le diamètre de tête de dent de la denture de la pièce à usiner est déterminé par les lignes de contact du deuxième contact d'usinage.

4. Procédé selon l'une des revendications précédentes, dans lequel l'écart de diamètre du cercle de tête de la denture de la pièce à usiner par rapport à sa valeur moyenne prise sur une dent de pièce à usiner est inférieur à 200 µm, de préférence inférieur à 80 µm, notamment inférieur à 20 µm.

5. Procédé selon l'une des revendications précédentes, dans lequel l'avancée du deuxième contact d'usinage a une composante principale dirigée le long de l'axe de rotation de la pièce.

6. Procédé selon l'une des revendications précédentes, présentant un déphasage continu lors du deuxième contact d'usinage, notamment un déphasage oscillant.

7. Procédé selon la revendication 6, dans lequel le rapport entre la fréquence d'oscillation du déphasage et la vitesse de rotation de la pièce à usiner est donné par (2k+1)/(2m), où m est supérieur à 2 et de préférence inférieur à 10, notamment inférieur à 7, de préférence inférieur ou égal à 4, et k est supérieur ou égal à 0 et de préférence inférieur à 10, et de préférence k et/ou m sont des nombres entiers.

8. Procédé selon l'une quelconque des revendications précédentes, dans lequel le premier contact d'usinage est un contact de power skiving ou de hard skiving.

9. Procédé selon la revendication 8, dans lequel la denture de l'outil est une roue de skiving à meulage en gradin.

10. Procédé selon l'une quelconque des revendications précédentes, dans lequel le déphasage est généré par une rotation supplémentaire de la denture de la pièce et/ou de l'outil, notamment par une rotation supplémentaire de la denture de la pièce.

11. Procédé d'usinage ou de production d'une denture sur une pièce à usiner à l'aide d'une denture d'outil, dans lequel la denture d'outil est amenée dans un premier contact d'usinage avec la denture de pièce à usiner mise en rotation tout en étant serrée dans une configuration d'ablocage dans ce qui constitue un couplage roulant dans lequel les dents de l'outil sont associées aux entredents de la denture de pièce à usiner, conformément à un procédé selon les revendications précédentes, dans lequel procédé il est produit, par les zones de tête de dent de ladite denture d'outil, par usinage par enlèvement de matière sur la pièce serrée dans la même configuration d'ablocage, une surface qui s'écarte des zones de pied de la denture de la pièce à usiner et qui sert de surface saisissable et/ou de surface de repérage et qui est essentiellement annulaire en section orthogonale à l'axe de rotation de la pièce.

12. Procédé selon la revendication 11, dans lequel la surface essentiellement annulaire est discontinue.

13. Programme de commande doté d'instructions de commande qui, lorsqu'elles sont exécutées sur une commande d'une machine à tailler les engrenages, l'amènent à exécuter un procédé selon l'une des revendications précédentes.

14. Machine à tailler les engrenages dotée d'une broche porte-pièce permettant de serrer une pièce pouvant être entraînée en rotation, une broche porte-outil permettant d'entraîner en rotation une denture d'outil, au moins un et notamment plusieurs axes de positionnement et/ou de réglage pour le positionnement relatif de l'axe de rotation de l'outil par rapport à l'axe de rotation de la pièce et un dispositif de commande qui effectue une commande par le biais d'instruction de commande visant à l'exécution d'un procédé selon l'une des revendications 1 à 12.
